# EUROPÄISCHE PATENTSCHRIFT

(11) **EP 3 550 322 B1**
(45) Veröffentlichungstag und Bekanntmachung des Hinweises auf die Patenterteilung: **26.07.2023**
(21) Anmeldenummer: 19164918.5
(22) Anmeldetag: 25.03.2019
(51) Int. Cl.: G01S 7/40, G01S 7/497, G01S 13/931, G01S 17/931, G01S 7/41

(54) **KALIBRIERUNGSSTRECKE ZUR KALIBRIERUNG EINES MESSSYSTEMS UND EIN VERFAHREN ZUR KALIBRIERUNG EINES MESSSYSTEMS**
CALIBRATION LINE FOR CALIBRATING A MEASURING SYSTEM AND A METHOD FOR CALIBRATING A MEASURING SYSTEM
SEGMENT D'ÉTALONNAGE DESTINÉ À L'ÉTALONNAGE D'UN SYSTÈME DE MESURE ET PROCÉDÉ D'ÉTALONNAGE D'UN SYSTÈME DE MESURE

(30) Priorität: 29.03.2018 DE 102018204899
(43) Veröffentlichungstag der Anmeldung: 09.10.2019
(73) Patentinhaber: ZF Friedrichshafen AG, 88046 Friedrichshafen (DE)
(72) Erfinder: Maile, Florian, 88045 Friedrichshafen (DE); Oprisan, Dan, 88147 Achberg (DE)
(74) Vertreter: ZF Friedrichshafen AG

(56) Entgegenhaltungen:
- DE-A1- 10 116 278
- DE-A1-102007 001 367
- DE-B3-102015 011 020
- US-A1- 2002 044 080

## Beschreibung

Die Erfindung betrifft eine Kalibrierungsstrecke zur Kalibrierung eines Messsystems eines Kraftfahrzeugs sowie ein Verfahren zur Kalibrierung eines Messsystems eines Kraftfahrzeugs an einer Kalibrierungsstrecke.

Es sind verschiedene Kalibrierungsverfahren bekannt, beispielsweise Kalibrierungsverfahren, die am Ende eines Fertigungsbandes an dem Kraftfahrzeug durchgeführt werden oder Kalibrierungsverfahren, die in bestimmten Zuständen des Fahrzeugs regelmäßig durchgeführt werden.

Die gattungsgemäße DE 10 2015 011 020 B3 beschreibt eine Zuordnungstrecke und ein Verfahren zum Zuordnen von Sensoren an einem Fahrzeug. Hierbei durchfährt das Fahrzeug die Zuordnungsstrecke mit zwei Radarzielen. Durch die bereitgestellten Messdaten kann ein Steuergerät jeden Sensor eindeutig einer Position an dem Fahrzeug zuweisen.

Die DE 101 16 278 A1 beschreibt ein stationäres Verfahren für die Kalibrierung von Sensoren, insbesondere Lidarsensoren.

Weitere Kalibrierungsstrecken und Verfahren zur Kalibrierung eines Messsystems sind aus US 2002 0044080 A1 und DE 10 2007 001 367 A1 bekannt.

Es ist Aufgabe eine weitere Möglichkeit zur Kalibrierung eines Messsystems eine Kraftfahrzeugs bereitzustellen, die ein besonders einfaches und genaues Kalibrieren des Sensors des Kraftfahrzeugs ermöglicht.

Die Aufgabe wird gelöst durch eine Kalibrierungsstrecke gemäß dem Patentanspruch 1. In den abhängigen Patenansprüchen sind vorteilhafte Ausgestaltungsvarianten der Kalibrierungsstrecke erläutert.

Die Kalibrierungsstrecke ist günstigerweise für ein RADAR Messsystem und / oder für ein LIDAR Messsystem geeignet.

Einerseits ist die Anordnung des Messsystems an dem Aufbau toleranzbehaftet, andererseits weist auch das Messsystem selbst entsprechende Messtoleranzen auf. Mit Hilfe der Kalibrierungsstrecke und einem Kalibrierungsverfahren können Abweichungen von der Solleinbaulage des Messsystems sowie entsprechende Messtoleranzen durch die Kalibrierung ausgeglichen werden.

Die Kalibrierungsstrecke ist zur Kalibrierung des Messsystems des Kraftfahrzeugs ausgebildet, welches die Kalibrierungsstrecke durchfährt. Bei dem Messsystem handelt es sich um ein mobiles Messsystem, welches sich gegenüber seiner Umgebung bewegen kann, insbesondere durch gemeinsame Bewegung mit dem Kraftfahrzeug.

Die Kalibrierungsstrecke umfasst eine Mehrzahl an Reflektoren sowie eine Fahrbahn für das Kraftfahrzeug. Bei den Reflektoren handelt es sich Reflektoren, die für das entsprechende Messsystem geeignet sind. Bei einem RADAR Messsystem kann dies beispielsweise ein Tripelspiegel sein, auch Corner Reflektor genannt, bei einem LIDAR Messsystem ein Retroreflektor oder auch eine Platte mit einer reflektierenden Oberfläche.

Das Kraftfahrzeug kann die Fahrbahn durch einen Eigenantrieb oder durch Fremdantrieb zurücklegen. Die Fahrbahn kann beispielsweise durch eine Ebene ausgebildet sein, welche für das Fahrzeug geeignet ist, sodass dieses die Fahrbahn überfahren oder sich auf dieser fortbewegen kann. Das Kraftfahrzeug kann die Kalibrierungsstrecke mit Eigenantrieb insbesondere manuell oder autonom zurücklegen. Alternativ kann es sich bei der Fahrbahn auch um ein Förderband handeln, auf welches das Kraftfahrzeug mit dem Sensor gestellt wird, sodass dieses ohne Eigenantrieb entlang der Kalibrierungstrecke gefahren wird.

Die Reflektoren sind an der Kalibrierungsstrecke in einer definierten Anordnung angeordnet. Die Anordnung ist günstigerweise derart gewählt, dass der Sensor jeden der Reflektoren beim Zurücklegen der Fahrbahn bzw. der Fahrstecke zumindest zeitweise oder abschnittsweise detektieren kann. Die definierte Anordnung der Reflektoren ist günstigerweise dadurch ausgezeichnet, dass diese Anordnung mit hoher Genauigkeit bereitgestellt ist. Zudem ändert sich die Position der Reflektoren relativ zueinander nicht, wobei diese günstigerweise fest an der Kalibrierungsstrecke angeordnet sind. Insbesondere führen die Reflektoren keine Relativbewegung gegenüber einander und auch gegenüber der Fahrbahn aus.

Mit Vorteil sind die Reflektoren derart angeordnet, dass diese sich beim Durchfahren der Kalibrierungsstrecke sind nicht gegenseitig verdecken. Dadurch kann jeder Reflektor von dem Messsystem über den gesamten Zeitabschnitt detektiert werden.

Diese definierte Anordnung der Reflektoren erzeugt bei dem Durchfahren der Kalibrierungsstrecke Messdaten. An dem Kraftfahrzeug sind Kalibrierungsdaten hinterlegt, die unter optimalen Bedingungen bezüglich der Einbaulage des Messsystem und der Messtoleranz zu erwarten sind. Durch Vergleich der Messdaten und der Kalibrierungsdaten werden Rückschlüsse über die Abweichungen gezogen, woraus sich Kalibrierungsparameter ergeben. Mithilfe der Kalibrierungsparameter kann die ermittelten Relativposition eines Objekts zu dem Kraftfahrzeug auf die tatsächliche Relativposition gegenüber dem Kraftfahrzeug umgerechnet werden. Dies wird vorzugsweise für alle ermittelten Größen bereitgestellt, wie beispielsweise Radialabstand, Seitenwinkel, Höhenwinkel und Radialgeschwindigkeit.

Die Kalibrierungsdaten können an dem Kraftfahrzeug auf mehrere Arten hinterlegt sein. Insbesondere entsprechend die Kalibrierungsdaten einem Messsystem, welches in Solleinbaulage an dem Kraftfahrzeug angeordnet ist und keinerlei Messabweichungen aufweist. In einer Variante umfassen die Kalibrierungsdaten Information über die Anordnung der Reflektoren. Aus der Information über die Anordnung der Reflektoren lassen sich sodann die zu erwartenden Messdaten berechnen.

Zudem ist ein Reflektor auf einer anderen Wegstrecke entlang der Fahrbahn angeordnet ist als ein anderer Reflektor, wobei die Reflektoren seitlich abwechselnd mit periodischem Abstand angeordnet.

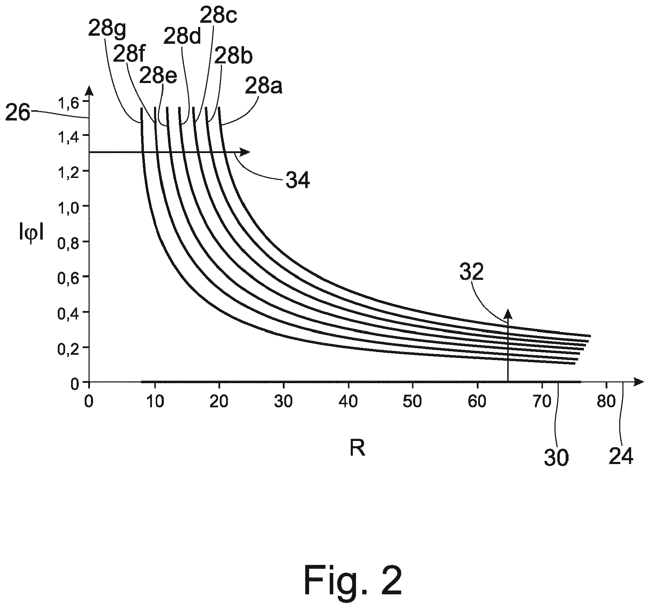

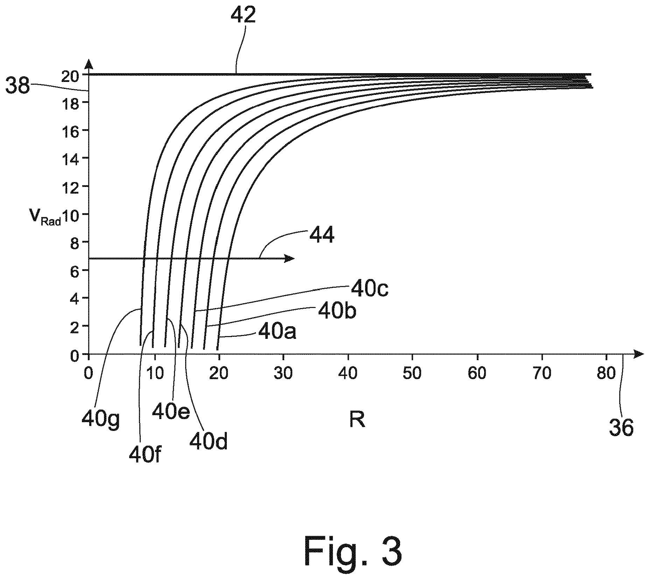

Dadurch werden die Reflektoren von dem Fahrzeug nacheinander passiert, sodass diese einzeln aus dem Sichtbereich der Messsystems austreten, wodurch insbesondere ein Seitenwinkel kalibriert werden kann. Durch geschickte Anordnung der Reflektoren entlang der Wegstrecke kann eine Verteilung der detektierten Reflektoren bereitgestellt werden. Dadurch wird bei einem Toleranzfreien Messsystem eine gleichmäßige Verteilung der detektierten Reflektoren bereitgestellt, siehe auch Figurenbeschreibung zu Fig. 2 und 3. Aufgrund von Abweichungen der Messdaten von der gleichmäßigen Verteilung lässt sich relativ einfach auf die tatsächlichen Abweichungen des Messsystems von dem toleranzfreien Messsystem schließen. Dementsprechend kann eine Kalibrierung besonders einfach durchgeführt werden.

Insbesondere ist der Wegstreckenabstand für benachbarte Reflektoren identisch. Vorzugsweise sind wegstreckenbenachbarte Reflektoren gegenüberliegend der Fahrbahn angeordnet. Die Reflektoren können auch im Höhenprofil abwechselnd mit demselben Wegstreckenabstand angeordnet sein.

Mithilfe der Kalibrierungsstrecke wird die Genauigkeit der Detektion von Objekten gegenüber dem Kraftfahrzeug wesentlich verbessert.

Im Weiteren werden Merkmale der Kalibrierungsstrecke nach Anspruch 1 sowie vorteilhafte Ausgestaltungsvarianten der Kalibrierungsstrecke erläutert.

In der Kalibrierungsstrecke nach Anspruch 1 wird definiert, dass die Reflektoren an einem Ende der Fahrbahn und/oder seitlich der Fahrbahn angeordnet sind.

Das Kraftfahrzeug fährt dementsprechend entlang der Fahrbahn auf die Reflektoren zu und / oder an diesen vorbei. Die Reflektoren können dabei einseitig oder beidseitig der Fahrbahn angeordnet sein. Auch eine Anordnung oberhalb der Fahrbahn und / oder auf der Fahrbahn, sodass das Kraftfahrzeug über zumindest einen Teil der Reflektoren hinwegfährt, ist von Vorteil.

Beispielsweise wird ein Sensor kalibriert, welcher an einer Vorderseite des Kraftfahrzeugs angeordnet ist. Die Reflektoren sind so ausgerichtet, dass die von dem Sensor ausgesendete Strahlung zurück zu dem Sensor reflektiert wird. Dabei bewegt sich das Kraftfahrzeug auf den oder die Reflektoren hinzu.

Die Reflektoren können auch an einem Anfang der Fahrbahn angeordnet sein.

Mit besonderem Vorteil ist zumindest einer der Reflektoren auf einen Anfang der Kalibrierungsstrecke oder auf ein Ende der Kalibrierungsstrecke ausgerichtet. Günstigerweise ist zumindest einer der Reflektoren auf die Fahrbahn hin ausgerichtet, also insbesondere orthogonal zur Fahrbahn.

Vorzugsweise sind die Reflektoren immer so ausgerichtet, dass die Strahlung des jeweiligen Messsystems reflektiert werden kann. Zur Kalibrierung eines Messsystems, welches an einer Front des Kraftfahrzeugs angeordnet sind, zeigen die Reflektoren vorzugsweise auf einen Anfang der Kalibrierungsstrecke hin. Zur Kalibrierung eines Messsystems, welches an einem Heck des Kraftfahrzeugs angeordnet ist, zeigen die Reflektoren vorzugsweise auf ein Ende der Kalibrierungsstrecke hin. Zur Kalibrierung eines Messsystems, welches seitlich an dem Kraftfahrzeug angeordnet ist, zeigen die Reflektoren vorzugsweise im Wesentlichen orthogonal zu einer Fahrbahn oder Fahrrichtung.

Insbesondere können an der Kalibrierungsstrecke mehrere und auch verschiedene Reflektoren angeordnet sein, um Messsysteme unterschiedlicher Art und / oder auch unterschiedlicher Anordnung an dem Kraftfahrzeug gleichzeitig zu kalibrieren. Insbesondere können dadurch die verschiedenen Messsysteme derart kalibriert werden, dass die Positionen identischer Objekte, welche mit verschiedenen Messsystemen ermittelt wurden, gegenüber dem Kraftfahrzeug dieselbe Relativposition und / oder Relativbewegung bereitstellen.

In der Kalibrierungsstrecke nach Anspruch 1 wird definiert, dass einer der Reflektoren als Referenzreflektor ausgebildet ist.

Der Referenzreflektor stellt eine Art Landmarke für den Sensor dar. Der Referenzreflektor ist am Ende der Kalibrierungsstrecke bzw. der Fahrbahn angeordnet und nimmt eine bestimmte Referenzposition an der Kalibrierungsstrecke ein. Insbesondere ist der Referenzreflektor zentral an dem Ende Fahrbahn angeordnet. Der Referenzreflektor kann beispielsweise eine größere Reflektionsfläche aufweisen oder durch zwei benachbarte Tripelspiegel ausgebildet sein, wobei die weiteren Reflektoren durch einzelne Tripelspiegel ausgebildet sind. Die Daten, welche der Sensor durch den Referenzreflektor erhält können beispielsweise für die weitere Kalibrierung als Referenzwert verwendet werden.

Es wird vorgeschlagen, dass der Referenzreflektor in einer zentralen Position am Ende der Fahrbahn angeordnet ist. Die zentrale Position entspricht günstigerweise einer Mittigen Anordnung am Ende der Fahrbahn, wobei der Referenzreflektor vorzugsweise auf derselben Höhe angeordnet ist, wie das Messsystem. Vorzugsweise wird der Referenzreflektor dadurch bei einem Höhenwinkel und einem Seitenwinkel von 0° detektiert.

Günstigerweise weist der Referenzreflektor eine andere Reflektionsfläche oder Intensität auf, als die restlichen Reflektoren.

Die Intensität oder die Fläche des detektierten Referenzreflektors ermöglicht die Unterscheidung von den weiteren Reflektoren.

Das Kraftfahrzeug bewegt sich entlang der Fahrbahn. Insbesondere kann die Position des Kraftfahrzeugs und / oder dessen Eigengeschwindigkeit durch Detektion der Reflektoren durch das Messsystem bestimmt werden.

In der Kalibrierungsstrecke nach Anspruch 1 ist ein Reflektor auf einer anderen Höhe gegenüber der Fahrbahn angeordnet als ein anderer Reflektor.

Durch die Anordnung von Reflektoren in unterschiedlicher Höhe kann ein Höhenwinkel oder eine Detektionshöhe des Messsystems kalibriert werden. Insbesondere sind mehrere Reflektoren auf derselben Höhe, jedoch an unterschiedlichen Positionen angeordnet. Günstigerweise können mehrere Reflektoren übereinander angeordnet sein, vorzugsweise sich wiederholendem Abstand.

Mit Vorteil ist ein Reflektor auf einem anderen Abstand von der Fahrbahn angeordnet als ein anderer Reflektor. Günstigerweise weisen die Reflektoren, welche auf derselben Höhe angeordnet sind, alle denselben Abstand zur Fahrbahn auf.

Der Abstand entspricht beispielsweise einem Abstand von einer Mitte der Fahrbahn. Durch diese verschiedenen Anordnungsmöglichkeiten der Reflektoren gegenüber der Fahrbahn kann eine optimale Kalibrierung aller Parameter des Sensors bereitgestellt werden. Insbesondere lässt sich durch denselben Abstand der Reflektoren mit derselben Höhe von der Fahrbahn die gleichmäßige Verteilung gemäß der Fig. 2 und 3 der Figurenbeschreibung erreichen.

Mit Vorteil sind nur innerhalb eines Teilabschnitts der Wegstrecke entlang der Fahrbahn Reflektoren angeordnet.

Insbesondere weisen die Reflektoren des Teilabschnitts alle in dieselbe Richtung. Für die Kalibrierung eines Messsystems an einer Kraftfahrzeugfront ist es ausreichend, wenn die Reflektoren zunächst im Fernfeld und anschließend im Nahfeld detektiert werden, sodass weitere Reflektoren eingespart werden können. Insbesondere Reflektoren, die an Anfang der Kalibrierungsstrecke angeordnet sind, würden relativ schnell aus dem Sichtbereich des Messsystems austreten und dadurch nur wenig Informationen für eine Kalibrierung des Messsystems bereitstellen.

Günstigerweise sind Reflektoren, die im Wesentlichen in dieselbe Richtung weisen, nur in einem Teilabschnitt der Wegstrecke angeordnet.

Bei der Kalibrierung eines Messsystems an einer Fahrzeugfront kann beispielsweise in einem ersten Teilabschnitt der Wegstrecke kein Reflektor angeordnet sein, wohingegen in einem zweiten Teilabschnitt die Reflektoren sowie auch gegebenenfalls ein Referenzreflektor angeordnet sind. Der erste Teilabschnitt kann beispielsweise 30, 40, 50 % der Wegstrecke entsprechen, wobei der zweite Teilabschnitt 50, 60 oder 70 % der Wegstrecke entsprechen kann. Alternativ können die Reflektoren über die gesamte Wegstrecke verteilt sein.

Bei der Kalibrierung eines Messsystems an einem Fahrzeugheck verhält es sich identisch, mit dem Unterschied, dass die Reflektoren im Wesentlichen in dieselbe Richtung zeigen, in diesem Fall also zum Ende der Kalibrierungsstrecke weisen und in einem Teilabschnitt zu Beginn der Wegstrecke angeordnet sind, sodass die Ausführungen des vorigen Absatzes sinngemäß gelten.

Es wird vorgeschlagen, dass einer der Reflektoren in eine andere Richtung weist als ein anderer Reflektor.

Vorzugsweise weist eine erste Teilanzahl der Reflektoren in eine erste Richtung, wobei eine zweite Teilanzahl an Reflektoren in eine zweite Richtung weist. Die Strahlung wird gerade dann reflektiert, wenn diese aus einer Richtung auf den Reflektor trifft, in die dieser weist. Insbesondere deckt der Reflektor einen Raumwinkel ab, bezüglich der er Strahlung reflektiert.

Die Richtung der Reflektoren kann insbesondere von der Position des Reflektors an der Kalibrierungsstrecke abhängen. Wie bereits erwähnt können mithilfe einer solchen Kalibrierungsstrecke mehrere Messsysteme eine Kraftfahrzeugs gleichzeitig kalibriert werden, wobei je nach Anordnung und Sichtbereich des Messsystems die Reflektoren eine bestimmte Richtung aufweisen sollten.

Vorteilhafterweise ist die Kalibrierungsstrecke zwischen 20 bis 100 Meter lang, wobei eine Länge von 50 Metern bevorzugt wird. Günstigerweise ist die Kalibrierungsstrecke in einem Tunnel angeordnet oder von einem Tunnel umgeben, sodass natürliche Reflektoren möglichst vollständig ausgeblendet sind. Der Tunnel kann beispielsweise durch ein Zelt ausgebildet sein, welches an dessen Innenseite eine reflektionsarme Fläche bereitstellt.

In einer alternativen Ausführung sind die Reflektoren derart ausgebildet, dass sich diese durch ein konkretes Merkmal auszeichnen, welches sich von natürlichen Reflektoren in dem Umfeld der Kalibrierungsstrecke unterscheiden. Dieses Merkmal kann beispielsweise eine bestimmte Intensität der reflektierten Strahlung sein, welche durch die Reflektionsfähigkeit des Reflektors bestimmt ist.

Günstigerweise weisen die Reflektoren im Wesentlichen dieselbe Reflektivität auf, gegebenenfalls mit Ausnahme des Retroreflektors. Dadurch kann das Messsystem die Reflektoren aufgrund deren ähnlichen Intensität von anderen Reflektoren unterscheiden. Die Reflektoren können beispielsweise durch Retroreflektoren oder Tripelspiegel ausgebildet sein, sodass ein Großteil der Strahlung reflektiert wird.

Zudem wird die Aufgabe durch ein Verfahren gemäß dem Patentanspruch 3 gelöst.

Das Verfahren ist für die Kalibrierung eines mobilen Messsystems, insbesondere eines Messsystems eines Kraftfahrzeugs an einer Kalibrierstrecke nach einem der Ansprüche 1 bis 2 ausgebildet.

Die Kalibrierungsstrecke weist zumindest eine Fahrbahn sowie mehrere Reflektoren auf. Das Kraftfahrzeug bewegt sich entlang der Fahrbahn, wobei das Messsystem Messdaten ermittelt. Insbesondere sendet das Messsystem Strahlung aus, die an den Reflektoren reflektiert wird und sodann von dem Sender detektiert wird.

Die aufgrund der Detektion der Reflektoren erhaltenen Messdaten werden beispielsweise in einem Speicherelement abgelegt und später zur weiteren Verarbeitung bereitgestellt. Insbesondere wird der Kalibrierungsvorgang vor dem Durchfahren oder während dem Durchfahren der Kalibrierungsstrecke gestartet. Dieses Starten kann beispielsweise durch ein manuelles Auslösen des Verfahrens ausgeführt sein oder es wird automatisch das Muster der Kalibrierungsstrecke erkannt, sodass das Verfahren von alleine bzw. automatisch beginnt.

Zudem sind an dem Kraftfahrzeug Kalibrierungsdaten hinterlegt. Diese Kalibrierungsdaten können beispielsweise ebenfalls in dem Speicherelement abgelegt sein. Die Kalibrierungsdaten umfassen beispielsweise die zu erwartenden Messdaten für ein toleranzfreies Messsystem, welches toleranzfrei angeordnet ist. Alternativ umfassen die Messdaten die Anordnung der Reflektoren, wobei aus diesen die zu erwartenden Messdaten simuliert werden.

Die Kalibrierungsdaten und die Messdaten werden sodann miteinander verglichen, wodurch Abweichungen der Messdaten von den Kalibrierungsdaten festgestellt werden. Mithilfe der ermittelten Abweichungen wird das Messsystem kalibriert. Insbesondere werden Kalibrierungsparameter bereitgestellt, die ein Umrechnen der ermittelten Position und Geschwindigkeiten der detektierten Reflektoren auf die tatsächliche Position und Relativgeschwindigkeit der Reflektoren gegenüber dem Kraftfahrzeug umzurechnen. Diese Umrechnungen werden anschließend zur Kalibrierung auf detektierte Objekte angewendet.

Gegebenenfalls können auch mehrere Messsysteme zueinander kalibriert werden, sodass identische Reflektoren und Später Objekte unabhängig von dem detektierten Sensor gegenüber dem Fahrzeug dieselbe Relativposition und gegebenenfalls dieselbe Relativgeschwindigkeit bereitstellen.

Des Weiteren wird eine Winkelverteilung der Messdaten der Reflektoren bei einem bestimmten Referenzabstand zur Kalibrierung verwendet wird.

Diese Winkelverteilung ist durch die Anordnung Reflektoren an der Kalibrierungsstrecke festgelegt. Stimmt die gemessene Winkelverteilung mit der Winkelverteilung der Kalibrierungsdaten bei dem Referenzabstand überein, so ist das Messsystem in der Solleinbaulage eingebaut. Ist das Messsystem jedoch nicht in der Solleinbaulage an dem Kraftfahrzeug angeordnet, so unterscheidet sich die Winkelverteilung bei dem bestimmten Referenzabstand. Aufgrund der Art der Abweichung kann ermittelt werden wie groß die tatsächlichen Abweichungen des Messsystems von dem Sollwert sind. Dementsprechend kann durch Kalibrierung eine Korrektur der ermittelten Detektionsgrößen vorgenommen werden. Vorzugsweise wird die Winkelverteilung im Fernfeld zur Kalibrierung betrachtet, also bei großem Referenzabstand, insbesondere wenn sich das Kraftfahrzeug in dem ersten Teilabschnitt der Wegstrecke von 50% befindet.

Zusätzlich alternativ wird eine Abstandsverteilung der Reflektoren der Messdaten bei einem bestimmten Winkel zur Kalibrierung verwendet.

Bei dem Winkel kann es sich um den Seitenwinkel oder den Höhenwinkel handeln. Insbesondere dient die Abstandsverteilung der Reflektionen der Kalibrierung durch Informationen der Reflektoren im Nahfeld. Grundsätzlich gelten die Ausführungen der vorigen vorteilhaften Ausgestaltung sinngemäß. Es wird somit vorzugsweise ein Winkel gewählt, der kurz vor dem Austritt aus dem Sichtbereich entspricht. Bei einem maximalen Seitenwinkel von 1,5 rad kann beispielsweise ein fester Seitenwinkel von 1,3 rad herangezogen werden. Bei diesem Winkel wird die Abstandsverteilung der Messdaten, also der einzelnen Reflektoren, mit den Kalibrierungsdaten verglichen. Dadurch kann auf die Abweichungen des Messsystems von dem Sollzustand geschlossen werden.

Zusätzlich oder alternativ wird eine Abstandsverteilung der Reflektoren bei einer bestimmten Radialgeschwindigkeit zur Kalibrierung verwendet.

Grundsätzlich gelten die Ausführungen der beiden vorigen vorteilhaften Ausgestaltungen sinngemäß. Hierbei wird die Relativgeschwindigkeit und deren Verteilung zur Ermittlung des Istzustandes des Messsystems verwendet. Abweichungen von der Verteilung der Messdaten bei der gewählten Relativgeschwindigkeit, absolut oder in Bezug auf die Referenzgeschwindigkeit, gegenüber den Kalibrierungsdaten, lassen sich Abweichungen von dem Sollzustand ermitteln.

Im Weiteren werden die vorteilhaften Ausführungsvarianten des Verfahrens erläutert.

Vorteilhafterweise stellt der Sensor einen Abstand und/oder eine Geschwindigkeit des Referenzreflektors als Referenzabstands und/oder Referenzgeschwindigkeit bereit.

Diese Referenzgrößen dienen als Grundlage für die weitere Kalibrierung. Wie bereits erwähnt kann der Referenzreflektor durch besondere Eigenschaften ausgezeichnet sein. Diese Referenzgrößen können beispielsweise mit Größen verglichen werden, die von anderen Sensoren des Kraftfahrzeugs bestimmt werden, beispielsweise der Geschwindigkeit durch ein ABS System. Die Referenzgeschwindigkeit kann beispielsweise für die Normierung der weiteren Radialgeschwindigkeiten herangezogen werden, um mit den Kalibrierungsdaten vergleichbare Messdaten bereitzustellen.

Mit besonderem Vorteil werden mithilfe der Kalibrierungsdaten rechnerisch theoretische Messwerte ermittelt, die an die tatsächlichen Messwerte angenähert werden.

Diese Annäherung kann beispielsweise durch mehrere iterative Rechenschritte erfolgen. Dabei werden Parameter, welche für die Berechnung der theoretischen Messwerte verwendet werden, bei jedem Schritt angepasst, bis die theoretische Messwerte und die tatsächlichen Messwerte nur noch geringfügig unterscheiden. Die Parameter geben dabei Rückschluss auf interne Effekte, die durch das Messsystem bedingt sind, wie Abweichungen von der optimalen Einbauposition, oder externe Effekte, die nicht durch das Messsystem bedingt sind. Die Parameter können sodann für die Kalibrierung des Messsystems verwendet werden.

Mit Vorteil dient die Referenzgeschwindigkeit der Normierung der Relativgeschwindigkeit.

Dadurch können unabhängig von der Geschwindigkeit, mit welcher das Kraftfahrzeug, die Kalibrierungsstrecke durchfährt, die Messdaten mit den Kalibrierungsdaten verglichen werden.

Günstigerweise durchfährt das Kraftfahrzeug die Kalibrierungsstrecke mit einer gleichmäßigen Geschwindigkeit.

Es wird vorgeschlagen, dass die Messdaten für einen Reflektor einen Messwinkel in Abhängigkeit des Referenzabstands umfassen. Mit anderen Worten ist eine Winkelbewegung des Reflektors gegenüber dem Abstand von dem Referenzreflektor aufgetragen.

Es wird weiter vorgeschlagen, dass die Kalibrierungsdaten für einen Reflektor einen Messwinkel in Abhängigkeit des Referenzabstandes umfassen.

In einer weiteren Variante umfassen die Messdaten für einen Reflektor eine Radialgeschwindigkeit gegenüber dem Referenzabstand.

Dies ist besonders bei einem Radar-Sensor von Vorteil, der die Radialgeschwindigkeit der detektierten Objekte sowie deren Position bestimmt. Bei dem Durchfahren der Kalibrierungsstecke weist jeder Reflektor eine für sich typische Radialgeschwindigkeit auf, absolut oder relativ zur Referenzgeschwindigkeit, die sich in Abhängigkeit von der Bewegungsrichtung und der Genauigkeit des Sensors von der tatsächlichen Position der Geschwindigkeit und Radialgeschwindigkeit unterscheiden kann. Insbesondere können die Messdaten des Nahbereichs für eine Kalibrierung des Messsystems herangezogen werden.

Mit Vorteil umfassend die Kalibrierungsdaten für einen Reflektor eine Radialgeschwindigkeit gegenüber dem Referenzabstand.

Die Kalibrierungsstrecke und das Verfahren zur Kalibrierung werden im Weiteren beispielhaft anhand mehrerer Figuren ausführlich erläutert. Es zeigen:
- Fig. 1: eine Kalibrierungsstrecke in Draufsicht;
- Fig. 2: Winkel der Reflektoren in Abhängigkeit des Abstands von dem Referenzreflektor;
- Fig. 3: Radialgeschwindigkeit der Reflektoren in Abhängigkeit des Abstands von dem Referenzreflektor;
- Fig. 4: Ablaufplan des Kalibrierungsverfahrens für die Kalibrierungsstrecke.

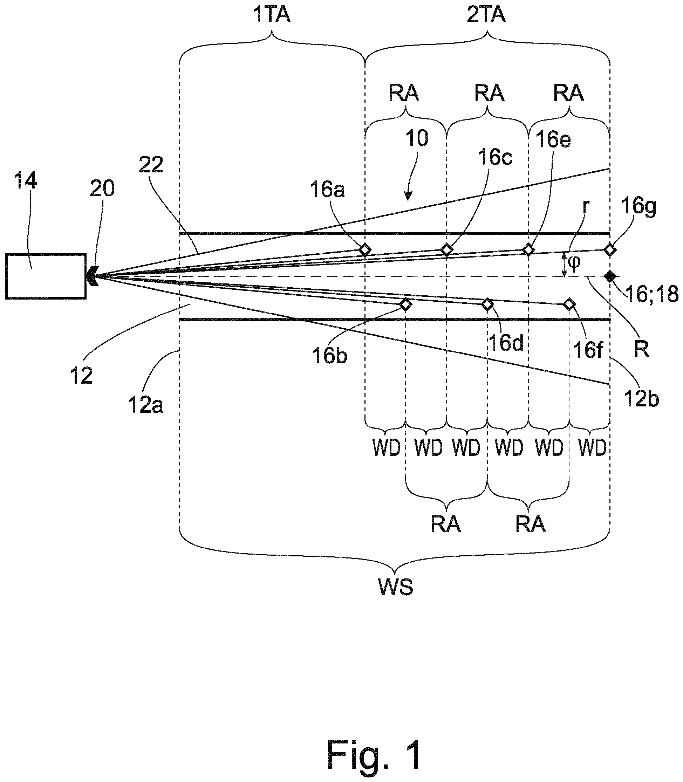

In der Fig. 1 ist eine Kalibrierungsstrecke 10 in Draufsicht dargestellt. Die Kalibrierungsstrecke umfasst eine Fahrbahn 12 für ein Kraftfahrzeug 14 sowie mehrere Reflektoren 16. Der Reflektor 18 dient als Referenzreflektor 18.

Die Kalibrierungsstrecke ist für die Kalibrierung von Messsystemen mit dreidimensionalem Sichtbereich gedacht. Zugunsten einer einfachen Beschreibung und Aufgrund von Problemen bei der Darstellung bei dreidimensionalen Systemen wird jedoch beispielhaft ein zweidimensionaler Aufbau gewählt. Die Ausführungen sind Sinngemäß auf die dritte Dimension anwendbar. Dieses Kalibrierungsverfahren und die zugehörige Kalibrierungsstrecke wurden explizit für Messsysteme mit 3-dimensionalem Sichtbereich entwickelt.

Der Referenzreflektor 18 ist zentral an dem Ende der Fahrbahn 12 angeordnet, sodass das Kraftfahrzeug 14 auf diesen zu fährt. An dem Kraftfahrzeug 14 ist ein Messsystem 20 angeordnet, beispielsweise ein Radar Messsystem.

Das Messsystem 20 kann die Position und vorteilhafterweise die Geschwindigkeit reflektierender Objekte in Relation gegenüber dem Kraftfahrzeug ermitteln. Dazu sendet das Messsystem eine Strahlung aus, wobei die reflektierte Strahlung detektiert wird, woraus die Relativposition und Relativgeschwindigkeit bestimmt wird. Das Radar Messsystem ermittelt als Detektionsgrößen insbesondere einen Abstand, einen Seitenwinkel, einen Höhenwinkel sowie eine Radialgeschwindigkeit.

Die Ermittlung dieser Größen kann bei einem Messsystem 20 aus verschiedenen Gründen fehlerbehaftet sein. Beispielsweise wenn die Anordnung des Messsystems 20 gegenüber einer Soll Einbaulage verändert ist, beispielsweise aufgrund von Einbautoleranzen, oder Aufgrund von Herstellungstoleranzen des Messsystems. Dadurch weichen die ermittelten Detektionsgrößen für ein detektiertes Objekt von den tatsächlichen Werten ab. Unter Kenntnis der Abweichungen können durch Kalibrierung die ermittelten Detektionsgrößen auf die tatsächlichen Werte rechnerisch zurückgeführt werden.

Für die Ermittlung der Abweichungen ist die Kalibrierungsstrecke 10 ausgebildet. Das Kraftfahrzeug durchfährt die Kalibrierungsstrecke 10, wodurch Korrekturparameter ermittelt werden können, die für weitere Detektionen im realen Straßenbetrieb verwendet werden.

An der Kalibrierungsstrecke 10 sind die Reflektoren 16 in einer definierten Anordnung angeordnet. Gemäß der Fig. 1 sind die Reflektoren 16 abwechseln seitlich neben der Fahrbahn 12 angeordnet.

Die Reflektoren 16 sind, in diesem zweidimensionalen Beispiel, alle auf derselben Höhe gegenüber der Fahrbahn 12 angeordnet. Grundsätzlich können die Reflektoren 16 auf unterschiedlichen Höhen angeordnet sein.

Für einen dreidimensionalen Aufbau können die Reflektoren 16a und 16b beispielsweise auf derselben Höhe angeordnet sein, mit einer geringen Höhe gegenüber der Fahrbahn. Die Reflektoren 16c und 16d sind auf einer mittleren Höhe und die Reflektoren 16e und 16f sind in großer Höhe angeordnet. Der Referenzreflektor ist günstigerweise auf der Höhe des Messsystems angeordnet, sodass dieser gegenüber einem Sollmesssystem, welches die Optimalen Bedingungen erfüllt, unter einem Höhenwinkel und Seitenwinkel von 0 auftritt. Beispielsweise können auch mehrere Reflektoren übereinander angeordnet sein.

Zudem ist der Abstand der Reflektoren 16, bis auf den Referenzreflektor 18, von der Mitte der Fahrbahn 12 für alle Reflektoren identisch. Grundsätzlich kann dieser Abstand von der Fahrbahn 12 für Reflektoren auch unterschiedlich sein.

Für einen dreidimensionalen Aufbau können die Reflektoren 16a und 16b beispielshaft einen großen Abstand zu der Fahrbahnmitte aufweisen. Die Reflektoren 16c und 16d könnten einen mittleren Abstand zu der Fahrbahnmitte aufweisen, wobei die Reflektoren 16e und 16f einen geringen Abstand zu der Fahrbahn 12 aufweisen.

Des Weiteren weisen die Reflektoren 16 auf einer Seite jeweils denselben Abstand zueinander auf. Die Reflektoren 16 sind periodisch zueinander mit einem Reflektorabstand RA angeordnet. Die Reflektoren 16 sind an der Fahrbahn 12 seitlich abwechseln bei identischer Wegstreckendifferenz WD angeordnet.

Die Wegstrecke WS beginnt bei Bezugszeichen 12a und endet bei 12b, also bei dem Referenzreflektor 18. Die Reflektoren sind in einem zweiten Teilabschnitt 2TA der Wegstrecke angeordnet, wobei in dem ersten Teilabschnitt 1TA keine Reflektoren 16 angeordnet sind. Die periodische und gleichmäßige Anordnung der Reflektoren 16 ist vorteilhaft.

Für eine optimale Kalibrierung ist es entscheidend, dass die Position der Reflektoren 16 zueinander und insbesondere relativ zu dem Referenzreflektor 18, genau bekannt ist und auch genau eingehalten werden.

Das Kraftfahrzeug 14 bewegt sich entlang der Wegstrecke WS, welche hier durch einen geradlinigen Fahrbahnverlauf ausgezeichnet ist. Das Messsystem 20 kann die Reflektoren 16 detektieren, welche innerhalb des Sichtbereichs 22 angeordnet sind. Das Messsystem 20 ermittelt unter anderem eine Position und eine Radialgeschwindigkeit jedes Reflektors 16 gegenüber dem Kraftfahrzeug 14. Die Position ist durch einen Radialabstand r und eine Seitenwinkel ϕ gegeben.

Grundsätzlich ist auch eine Erfassung des Höhenwinkels möglich. Da hier zugunsten einer einfachen Beschreibung ein zweidimensionale Beschreibung gewählt wurde, wird der Höhenwinkel nicht weiter erwähnt. Die Ausführungen zu dem Seitenwinkel ϕ treffen auch auf den Höhenwinkel zu.

Der Seitenwinkel ϕ und der Radialabstand r sind in der Fig. 1 für den Reflektor 16g beispielhaft mit Bezugszeichen versehen.

Bei der Bewegung des Kraftfahrzeugs 14 entlang der Wegstrecke ändert sich die Relativposition der Reflektoren 16 gegenüber dem Kraftfahrzeug 14. Das Messsystem 20 und dessen Sichtbereich 22 führen mit dem Kraftfahrzeug 14 eine gemeinsame Bewegung aus. Die Änderung der Relativposition der Reflektoren 16 und deren Radialgeschwindigkeit wird durch das Messsystem 20 erfasst.

In der Fig. 2 ist die Änderung des Seitenwinkels ϕ der Reflektoren 16 gegenüber dem Abstand des Messsystems 20 von dem Referenzreflektor 18 aufgetragen. Dies entspricht einem Messsystem, welches in der Soll-Einbauposition des Kraftfahrzeugs eingebaut ist und auch in jeder weiteren Hinsicht optimal ausgeführt ist.

Gegenüber der X-Achse 24 ist der Abstand R des Kraftfahrzeugs 14 von dem Referenzreflektor 18 aufgetragen. Gegenüber der Y-Achse 26 ist der Seitenwinkel ϕ aufgetragen. Jede der dargestellten Linien entspricht einem der Reflektoren 16, wobei bezüglich jeder Linie der Betrag des Seitenwinkels ϕ dargestellt ist.

Die Linie 30 entspricht der Detektion des Referenzreflektors 18. Insbesondere fällt die Linie 30 im Optimalfall mit der X-Achse zusammen. Der Referenzreflektor 18 ist hier zentral am Ende 12b der Fahrbahn 12 angeordnet. Beispielsweise kann der Referenzreflektor für die weitere Kalibrierung kenntlich gemacht werden. Dies kann beispielsweise durch die Verwendung zweier Reflektoren als gemeinsamer Referenzreflektor bereitgestellt werden. Alternativ könnte der Referenzreflektor derart ausgebildet sein, dass eine Intensität der zurückgestreuten Strahlung größer ist als die der anderen Reflektoren.

Die Linie 28a entspricht dem Verlauf des Detektionswinkels des Reflektors 16a beim Durchfahren der Kalibrierungsstrecke 10. Kommend von großem Abstand weist der Reflektor bei großem Abstand einen kleinen Seitenwinkel auf. Der Seitenwinkel ϕ nimmt mit abnehmenden Abstand des Kraftfahrzeugs zu dem Referenzreflektor 18 zu, bis der Reflektor 16a aus dem Sichtbereich 20 austritt.

Denselben Verlauf weisen die Linien 28b bis 28g für die Reflektoren 16b bis 16g auf. Unter Optimalbedingungen, also bei Einbau in Sollposition und bei toleranzfreiem Messsystem 20, ergibt sich die gezeigte Fig. 2. Bei Abweichungen der Einbaulage und dem Messsystem von dem Sollzustand ergeben sich entsprechende Abweichungen von den Linien 28 der Fig. 2.

Der Vergleich zwischen den gezeigten Verlauf der Linien in Fig. 2 und dem tatsächlich gemessenen Verlauf ermöglicht es Rückschlüsse auf die tatsächlichen Abweichungen des Messsystems und dessen Einbaulage zu schließen und diese zu korrigieren. Beispielsweise werden für die weitere Verarbeitung der Daten des Messsystems Korrekturparameter dargestellt, um eine tatsächliche Relativposition der detektierten Objekten zu bestimmen.

Insbesondere kann hierfür eine Verteilung der Winkel im Fernfeld für die Kalibrierung herangezogen werden. Beispielsweise wird die Winkelverteilung der Reflektoren 16 bei einem Abstand R von 65 betrachtet, dargestellt durch die Linie 32. Im Optimalfall ergibt sich bei der periodischen Anordnung der Reflektoren eine gleichmäßige Verteilung.

In dem Fall, dass das Messsystem um den Seitenwinkel ϕ verdreht montiert ist, würde sich die Darstellung der Fig. 2 ändern. Insbesondere würden jeweils zwei der Linien 28 einen geringeren Abstand zueinander aufweisen, wobei der Abstand zu dem benachbarten paar von Linien 28 verhältnismäßig größer ist. Durch diese Verteilung und die Relativabstände kann auf die Abweichung von der Sollposition des Messsystems 20 an dem Kraftfahrzeug 14 geschlossen werden.

Zusätzlich kann auch eine Abstandsverteilung bei einem bestimmten Winkel ϕ gemäß der Linie 34, beispielhaft bei einem Winkel von 1,3 rad, herangezogen werden. Aus dem Unterschied der Messdaten zu dem zu erwartenden Messergebnis können Kalibrierungsparameter bereitgestellt werden.

Bei einer Abweichung von den optimalen Bedingungen ändern sich aber nicht nur die beiden erwähnten Verteilungen der Linien. Es ändert sich die gesamte Darstellung der Fig. 2. Insbesondere verschieben sich die Linien 28 und auch deren Linienverlauf ändert sich. Des Weiteren wird der Referenzreflektor nicht mehr unter dem Seitenwinkel von 0° erfasst. Grundsätzlich kann jede Abweichung der Linien von der Darstellung in Fig. 2 für die Kalibrierung des Messsystems herangezogen werden. Hierzu kann beispielsweise das im Weiteren erläuterte iterative Berechnungsverfahren verwendet werden.

Die in der Fig. 2 optisch dargestellten Informationen, welche die Anordnung der Reflektoren 16 wiederspiegeln, werden als Kalibrierungsdaten in der einen oder anderen Form bereitgestellt. Dies können beispielsweise bestimmte Datenpunkte oder Linien sein oder auch die Anordnung der Reflektoren 16, aus welchen die zu erwartenden Messwerte rechnerisch bestimmt werden.

Insbesondere lässt sich aufgrund trigonometrischer Berechnungen bestimmen, ob eine Abweichung von den Kalibrierungswerten aufgrund Toleranzen des Messsystems und / oder Einbauposition stammen, oder ob externe Effekte diese Abweichungen bewirken. Ein externer Effekt kann beispielsweise durch eine Lenkbewegung bei durchfahren der Kalibrierungsstrecke entsprechen oder wenn die Kalibrierungsstrecke schräg durchfahren wird. Diese Effekte lassen sich anhand der Messdaten und unter Vergleich mit den Kalibrierungsdaten ermitteln. Dadurch kann eine Trennung der verschiedenen Einflussfaktoren bereitgestellt werden, sodass eine optimale Kalibrierung erreicht wird.

Zur Kalibrierung kann alternativ oder zusätzlich zu den erläuterten Kalibrierungsdaten auch die Radialgeschwindigkeit der Reflektoren gemäß der Fig. 3 verwendet werden. Die Fig. 3 zeigt ein Diagramm, welches die Radialgeschwindigkeit der Reflektoren 16 gegenüber dem Abstand des Messsystems 20 von dem Referenzreflektor 18 darstellt.

Über der X-Achse 36 ist der Abstand R von dem Referenzreflektor 18 aufgetragen und über der Y-Achse 38 die Radialgeschwindigkeit *v_{rad}* der Reflektoren 16. Die Verwendung der Radialgeschwindikeit *v_{rad}* ist insbesondere bei einem Radar Messsystem von Vorteil, da diese Messdaten unmittelbar bereitgestellt werden. Bei Messsystemen anderer Art können beispielsweise andere Größen für die Kalibrierung verwendet werden.

Die Linien 40a bis g stellen die Radialgeschwindigkeit der Reflektoren 16a bis g dar. Die Linie 42 stellt die Radialgeschwindgeit des Referenzreflektors 18 dar. Wie auch bei Fig. 2 zeigt die zu erwartenden Messdaten im Sollzustand des Messsystems und der Einbauposition.

Die Geschwindigkeit des Kraftfahrzeugs 14 ist beispielhaft mit 20 m/s gewählt. Dies ist insbesondere durch die Radialgeschwindigkeit des Referenzreflektors 18 gemäß der Linie 42. Der Referenzreflektor 18 ist beispielhaft in einer zentralen Position vor dem Messsystem 20 am Ende 12b der Fahrbahn 12 angeordnet, sodass sich die Radialgeschwindigkeit bei gleichmäßigem Durchfahren der Wegstrecke nicht ändert.

Die Geschwindigkeit der seitlich angeordneten Reflektoren 16a bis g ändert sich mit dem Abstand des Kraftfahrzeugs 14 von dem jeweiligen Reflektor 16a bis g. Gemäß der Linie 40a entspricht die Radialgeschwindigkeit des Reflektors 16a bei großen Abständen nahezu der Bewegungsgeschwindigkeit des Kraftfahrzeugs, wobei die Radialgeschwindigkeit bei geringerem Abstand des Kraftfahrzeugs 14 zu dem Referenzreflektor 18 abnimmt, bis der Reflektor 16a aus dem Sichtbereich des Messsystems 20 austritt. Die weiteren Reflektoren 16b bis g weisen einen vergleichbaren Verlauf innerhalb des Diagramms auf.

Insbesondere kann die Verteilung der Radialgeschwindigkeiten herangezogen werden, um etwaige Abweichungen des Messsystems sowie der Einbauposition zu bestimmen. Die Verteilung der Radialgeschwindigkeiten wird beispielhaft entlang der Linie 44 im Nahfeld bei einer Radialgeschwindigkeit von 7 m/s betrachtet. Aufgrund der periodischen Anordnung sind die Abstände zwischen den Linien 40 gleichmäßig verteilt. Bei einer Abweichung der Messwerte des Messsystems 20 beim Durchfahren der Kalibrierungsstrecke 10 können diese herangezogen werden, um eine Kalibrierung des Messsystems 10, beispielsweise gemäß der vorigen Erläuterungen, durchzuführen.

Insbesondere wird eine Verteilung der Messdaten des Reflektors im Nahbereich und im Fernbereich des Messsystems herangezogen, um mithilfe trigonometrischer Berechnungen eine Kalibrierung des Messsystems bereitzustellen.

Wie bereits bezüglich der Fig. 2 erläutert kann auch hier jede Abweichung von den Kalibrierungsdaten als Information für die Kalibrierung verwendet werden. Insbesondere wird auch hier das im Weiteren noch erläuterte Iterationsverfahren angewendet.

Grundsätzlich ist es von Vorteil, wenn das Kraftfahrzeug die Kalibrierungsstrecke mit einer gleichmäßigen Geschwindigkeit durchfährt. Insbesondere kann die Radialgeschwindigkeit auf die Bewegungsgeschwindigkeit des Kraftfahrzeugs normiert werden. Die Kalibrierung kann dann unabhängig von der tatsächlichen Geschwindigkeit des Kraftfahrzeugs durchgeführt werden. Auch Geschwindigkeitsänderungen während dem Durchfahren der Kalibrierungsstrecken könnten dadurch herausgerechnet werden. Insbesondere wird die Geschwindigkeit des Referenzreflektors als Referenz für die Normierung verwendet.

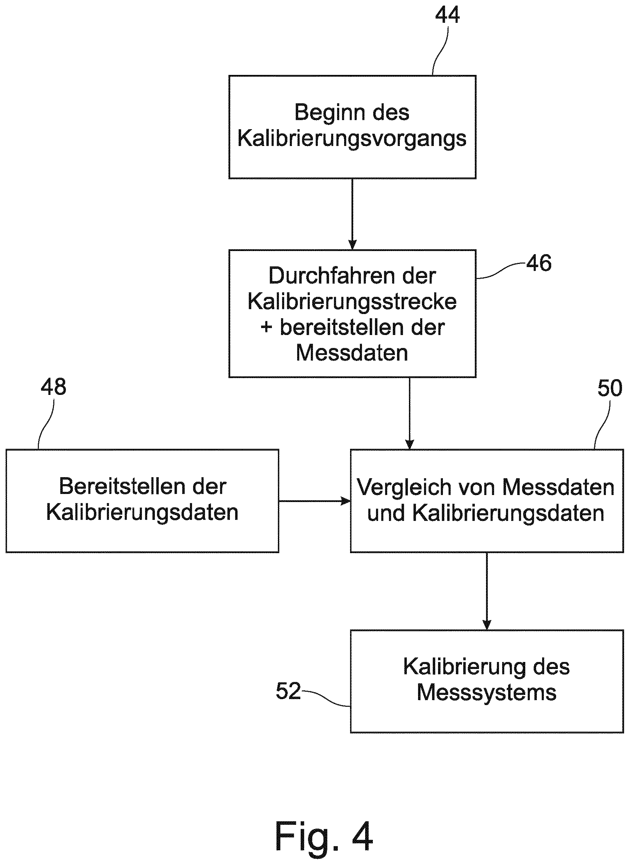

In der Fig. 4 sind die einzelnen Schritte, welche zum Kalibrieren des Messsystems 20 durchgeführt werden, in einem Ablaufplan dargestellt.

Bei einem ersten Schritt 44 wird das Verfahren zur Kalibrierung gestartet. Dies kann beispielsweise durch ein manuelles auslösen geschehen, oder durch eine automatische Erkennung der Kalibrierungsstrecke 12.

Daraufhin bewegt sich das Kraftfahrzeug 14 gemäß Schritt 46 an der Fahrbahn 12 der Kalibrierungsstrecke 10 entlang und durchfährt diese, wobei das Messsystem 20 die Reflektoren 16, insbesondere deren Relativposition und Relativgeschwindigkeit, detektiert und diese sodann als Messdaten bereitstellt. Das Durchfahren der Kalibrierungsstrecke kann durch Eigenantrieb des Kraftfahrzeugs, insbesondere Manuell oder Autonom, erfolgen. Alternativ kann ein Fremdantrieb bereitgestellt werden, der das Kraftfahrzeug entlang der Kalibrierungsstrecke fortbewegt.

Zudem werden gemäß Schritt 48 die Kalibrierungsdaten bereitgestellt. Diese können beispielsweise vorab in einem Speicherelement abgelegt sein. Alternativ kann auch eine Anordnung der Reflektoren 16 hinterlegt sein, wobei daraus das zu erwartende Messergebnis ermittelt bzw. simuliert wird. Durch die Simulation erhält man die Kalibrierungsdaten.

Gemäß Schritt 50 werden die Kalibrierungsdaten und die Messdaten miteinander verglichen. Insbesondere werden die weiter oben erläuterten Charakteristika herangezogen, um Unterschiede zu ermitteln. Beispielweise kann die Anordnung der Reflektoren verwendet werden, um über einen iterativen Prozess eine Anpassung der Kalibrierungsdaten an die Messdaten zu erreichen, woraus sich die Parameter ergeben, welche für die Abweichung relevant sind.

Insbesondere werden bei dem iterativen Prozess einerseits die Messdaten herangezogen und andererseits die Kalibrierungsdaten. Die Kalibrierungsdaten sind in diesem Fall als Anordnung der Reflektoren an der Kalibrierungsstrecke hinterlegt. Aus der Information über die Anordnung können mithilfe mehrerer Parameter die erwarteten Messwerte berechnet werden. Hieraus ergeben sich bei den Parametern für die optimalen Bedingungen die Messwerte der Fig. 2 und 3. Diese Berechnung wird sodann mehrfach durchgeführt, wobei eine iterative Anpassung der Parameter erfolgt, um die rechnerisch ermittelten Werte an die Messdaten anzugleichen. Nach mehreren Rechendurchgängen unterscheiden sich die rechnerisch ermittelten Werte nur noch geringfügig von den Messdaten. Die zugrundeliegenden Parameter für die rechnerisch ermittelten Werte bilden die Grundlage für die Kalibrierungsparameter und somit Information über die Einbaulage des Messsystems. Die ermittelten Parameter können unter anderem interne oder externe Parameter darstellen, sodass externe Einflüsse von den tatsächlichen Systemeinflüssen unterschieden werden können. Bei dem iterativen Prozess werden insbesondere alle Informationen, welche die Messdaten durch Abweichung von den Kalibrierungsdaten gemäß Fig. 2 und 3 bereitstellen, für die Kalibrierung genutzt. Dies umfasst insbesondere die Verschiebung der Linien wie auch die Änderung des Verlaufs der Linien sowie auch deren Relationen zueinander.

Die aus dem Vergleich nach Schritt 50 ermittelten Informationen werden sodann verwendet, um das Messsystem gemäß Schritt 52 zu kalibrieren. Dadurch werden die gemessenen Positionen von Objekten auf eine korrekte Relativposition und Relativgeschwindigkeit gegenüber dem Kraftfahrzeug umgerechnet. Insbesondere werden die in dem Schritt 50 ermittelten Parameter als Kalibrierungsparameter verwendet.

### Bezugszeichen

- 10: Kalibrierungsstrecke
- 12: Fahrbahn
- 12a: Anfang Wegstrecke
- 12b: Ende Wegstrecke
- 14: Kraftfahrzeug
- 16,a-g: Reflektor
- 18: Referenzreflektor
- 20: Messsystem
- 22: Sichtbereich
- 24: X-Achse (R)
- 26: Y-Achse (|ϕ|)
- 28,a-g: Linie
- 30: Linie
- 32: Linie
- 34: Linie
- 36: X-Achse (R)
- 38: Y-Achse (*v_{rad}*)
- 40,a-g: Linie
- 42: Linie
- 44: Schritt
- 46: Schritt
- 48: Schritt
- 50: Schritt
- 52: Schritt
- r: Radialabstand
- R: Abstand Referenzreflektor
- ϕ: Seitenwinkel
- *v_{rad}*: Radialgeschwindigkeit
- RA: Reflektorabstand
- WD: Wegstreckendifferenz
- WS: Wegstrecke

## Patentansprüche

1. Kalibrierungsstrecke (10) zur Kalibrierung eines Messsystems (20) eines Kraftfahrzeugs (14), umfassend
- eine Mehrzahl an Reflektoren (16, 18), sowie eine Fahrbahn (12) für das Kraftfahrzeug (14),
- wobei die Reflektoren (16, 18) in einer definierten Anordnung angeordnet sind,
wobei die Reflektoren (16, 18) an einem Ende der Fahrbahn (12) und seitlich der Fahrbahn (12) angeordnet sind, wobei einer der Reflektoren (16, 18) als Referenzreflektor (18) ausgebildet ist, wobei der Referenzreflektor (18) in einer zentralen Position am Ende der Fahrbahn (12) angeordnet ist,
wobei die seitlich der Fahrbahn (12) angeordneten Reflektoren (16) seitlich abwechselnd mit periodischem Abstand angeordnet sind, wobei ein Reflektor (16, 18) auf einer anderen Höhe gegenüber der Fahrbahn (12) angeordnet ist als ein anderer Reflektor (16, 18).

2. Kalibrierungsstrecke (10) nach Anspruch 1, **dadurch gekennzeichnet, dass** ein Reflektor (16) auf einem anderen Abstand von der Fahrbahn (12) angeordnet ist als ein anderer Reflektor (16).

3. Verfahren zur Kalibrierung eines Messsystems (20) eines Kraftfahrzeugs (14) an einer Kalibrierungsstrecke (10) nach einem der vorhergehenden Ansprüche,
- wobei die Kalibrierungsstrecke (10) eine Fahrbahn (12) und mehrere Reflektoren (16) aufweist,
- wobei sich das Kraftfahrzeug (14) entlang der Fahrbahn (12) bewegt und das Messsystem (20) Messdaten ermittelt,
- wobei an dem Kraftfahrzeug (14) Kalibrierungsdaten hinterlegt sind,
- wobei die Messdaten und die Kalibrierungsdaten miteinander verglichen werden, um eine Kalibrierung des Messsystems (20) bereitzustellen wobei
- eine Winkelverteilung der detektierten Reflektoren (16) bei einem bestimmten Referenzabstand zur Kalibrierung verwendet wird und / oder
- eine Abstandsverteilung der detektierten Reflektoren (16) der Messdaten bei einem bestimmten Winkel zur Kalibrierung verwendet wird und / oder
- eine Abstandsverteilung der detektierten Reflektoren (16) bei einer bestimmten Radialgeschwindigkeit zur Kalibrierung verwendet wird.

## Claims

1. Calibration line (10) for calibrating a measuring system (20) of a motor vehicle (14), comprising
- a plurality of reflectors (16, 18), and also a roadway (12) for the motor vehicle (14),
- wherein the reflectors (16, 18) are arranged in a defined arrangement,
wherein the reflectors (16, 18) are arranged at one end of the roadway (12) and laterally along the roadway (12), wherein one of the reflectors (16, 18) is formed as a reference reflector (18), wherein the reference reflector (18) is arranged in a central position at the end of the roadway (12),
wherein the reflectors (16) arranged laterally along the roadway (12) are arranged laterally alternately at periodic distances, wherein one reflector (16, 18) is arranged at a different height with respect to the roadway (12) than another reflector (16, 18).

2. Calibration line (10) according to Claim 1, **characterized in that** one reflector (16) is arranged at a different distance from the roadway (12) than another reflector (16).

3. Method for calibrating a measuring system (20) of a motor vehicle (14) on a calibration line (10) according to one of the preceding claims,
- wherein the calibration line (10) has a roadway (12) and multiple reflectors (16),
- wherein the motor vehicle (14) moves along the roadway (12) and the measuring system (20) determines measurement data,
- wherein calibration data are stored on the motor vehicle (14),
- wherein the measurement data and the calibration data are compared with one another in order to provide a calibration of the measuring system (20), wherein
- an angle distribution of the detected reflectors (16) with a specific reference distance is used for the calibration
and/or
- a distance distribution of the detected reflectors (16) of the measurement data with a specific angle is used for the calibration
and/or
- a distance distribution of the detected reflectors (16) with a specific radial speed is used for the calibration.

## Revendications

1. Segment d'étalonnage (10) permettant d'étalonner un système de mesure (20) d'un véhicule automobile (14), comprenant
- une pluralité de réflecteurs (16, 18), ainsi qu'une voie de circulation (12) pour le véhicule automobile (14),
- dans lequel les réflecteurs (16, 18) sont disposés dans un agencement défini,
dans lequel les réflecteurs (16, 18) sont disposés à une extrémité de la voie de circulation (12) et latéralement par rapport à la voie de circulation (12), dans lequel l'un des réflecteurs (16, 18) est réalisé sous forme de réflecteur de référence (18), dans lequel le réflecteur de référence (18) est disposé dans une position centrale à l'extrémité de la voie de circulation (12),
dans lequel les réflecteurs (16) disposés latéralement par rapport à la voie de circulation (12) sont disposés latéralement en alternance à intervalles périodiques, dans lequel un réflecteur (16, 18) est disposé à un niveau par rapport à la voie de circulation (12) différent d'un autre réflecteur (16, 18) .

2. Segment d'étalonnage (10) selon la revendication 1, **caractérisé en ce qu'**un réflecteur (16) est disposé à une autre distance de la voie de circulation (12) qu'un autre réflecteur (16).

3. Procédé permettant d'étalonner un système de mesure (20) d'un véhicule automobile sur un segment d'étalonnage (10) selon l'une quelconque des revendications précédentes,
- dans lequel le segment d'étalonnage (10) présente une voie de circulation (12) et plusieurs réflecteurs (16),
- dans lequel le véhicule automobile (14) se déplace le long de la voie de circulation (12) et le système de mesure (20) établit des données de mesure,
- dans lequel des données d'étalonnage sont mémorisées sur le véhicule automobile (14),
- dans lequel les données de mesure et les données d'étalonnage sont comparées les unes aux autres pour fournir un étalonnage du système de mesure (20), dans lequel
- une distribution angulaire des réflecteurs (16) détectés à une distance de référence déterminée est utilisée pour l'étalonnage, et/ou
- une distribution de distances des réflecteurs (16) détectés des données de mesure est utilisée pour l'étalonnage à un angle déterminé, et/ou
- une distribution de distances des réflecteurs (16) détectés est utilisée pour l'étalonnage à une vitesse radiale déterminée.
